# EUROPEAN PATENT SPECIFICATION

(11) **EP 2 630 825 B1**
(45) Date of publication and mention of the grant of the patent: **19.06.2019**
(21) Application number: 11752163.3
(22) Date of filing: 22.08.2011
(51) Int. Cl.: H04W 36/00

(54) **METHODS, APPARATUSES, SYSTEM, RELATED COMPUTER PROGRAM PRODUCT FOR HANDOVER PROCEDURES**
VERFAHREN, VORRICHTUNG, SYSTEM, ENTSPRECHENDES COMPUTERPROGRAMMPRODUKT FÜR ÜBERGABEVERFAHREN
PROCÉDÉS, APPAREILS, SYSTÈME, PRODUIT PROGRAMME D'ORDINATEUR ASSOCIÉ POUR DES PROCÉDURES DE TRANSFERT INTERCELLULAIRE

(30) Priority: 24.08.2010 WO PCT/EP2010/062324
(43) Date of publication of application: 28.08.2013
(73) Proprietor: Nokia Solutions and Networks Oy, 02610 Espoo (FI)
(72) Inventor: MOLNAR, Jozsef, H-1214 Budapest (HU); VIKMAN, Virpi Satu Helena, FIN-05460 Hyvinkää (FI)
(74) Representative: Ruuskanen, Juha-Pekka
(86) International application number: PCT/EP2011/064384
(87) International publication number: WO 2012/025490

(56) References cited:
- EP-A1- 1 993 309
- EP-A1- 2 190 243
- US-A1- 2007 230 440
- US-A1- 2010 002 629
- US-B1- 7 062 270
- "Digital cellular telecommunications system (Phase 2+); Handover procedures (GSM 03.09 version 5.1.0)", 3GPP STANDARD; GSM 03.09, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Version 5.1.0, 1 August 1997 (1997-08-01), pages 1-85, XP050381483,

## Description

### FIELD OF THE INVENTION

The present invention relates to handover procedures in communication networks. More specifically, the present invention relates to methods, apparatuses, a system, a related computer program product for handover procedures in communication networks.

### BACKGROUND

3rd Generation Partnership Project (3GPP) specifies various handover procedures in mobile communication networks. The purpose of handover procedures is to ensure that the connection to the Mobile Station (MS) or User Equipment (UE) is maintained as it moves from one cell or radio network to another. Handover between base station systems (BSS) or radio network subsystems (RNS) connected to the same mobile services switching centre (MSC) or 3G_MSC is termed as intra-MSC handover or intra-3G_MSC handover/relocation. Handover between base station systems (BSS) or radio network subsystems connected to different MSCs or 3G_MSCs is termed as inter-MSC handover or inter-3G_MSC handover/relocation. In addition, handover can happen between two access technologies. Such handovers are referred to as inter-system handover. An example of a known intersystem handover is a handover between Global System for Mobile communications (GSM) and Universal Mobile Telecommunications System UMTS).

A communication network operator may wish to control the usage of network and availability of services on a per subscriber basis. One exemplary way of achieving such a control can be by defining zones in the network. A zone may comprise one or more location areas, which in turn may comprise one or more cells in a GSM network or service areas in a UMTS network. For each subscriber, an operator can specify a list of zones where the subscriber is allowed to access services (hereinafter referred to as allowed zones). This can be done by a listing of zone identities in a subscriber database such as a home location register (HLR) in GSM networks. Further, the operator may store a zone configuration in a network node such as MSC, such zone configuration may be a mapping between zone identities and location areas.

It may be noted that operator may choose to specify a list of zones where a subscriber is not allowed to access services (hereinafter referred to as restricted zones), instead of specifying allowed zones. In a further option, an operator may choose to specify both list of allowed zones and list of restricted zones. The procedures described herein can as well be applied to these alternative implementations.

During location update procedure, the list of zone identities indicating allowed zones, restricted zones or both allowed and restricted zones, is downloaded from HLR by the visited location register (VLR) and is made available to the MSC. Thus, when a request for service is received from a particular location area in the network, the MSC can determine the identity of the zone to which the location area belongs and verify if access to services is allowed for the subscriber in the zone.

It is possible for an operator to define such service access restrictions for all the subscribers either temporarily or permanently to certain zones. This can be, for example, for security reasons. Access to services in certain location area in a network may be controlled a mobile services switching centre (MSC) based on a zone identity list in a subscription data and the zone configuration in the MSC.

With the list of zones defined per subscriber in the form of zone identities in HLR and the zone configurations defined in MSC, operator can control the access to services by subscribers. For example, a subscriber is allowed to get services (for example, location update, voice services, messaging etc) only when the subscriber initiates a communication session from a location area that belongs to an allowed zone. When the subscriber initiates a session from a location area that does not belong to an allowed zone (that is restricted zone), the session request will be rejected. This is possible since the MSC, which controls the session, is aware of the location of the subscriber and also the list of allowed zones.

Examples of such procedures are shown below.

In HLR, for a subscriber, allowed zone identities: 1, 2 and 5.

### Zone configuration in MSC1:

Location areas under MSC1: 1000, 1001, 1002, 1003, 1004 Zone identities - location areas mapping:
- Zone 1: 1000, 1001;
- Zone 2: 1001, 1002, 1003;
- Zone 3: 1004.

### Zone configuration in MSC2:

Location areas under MSC2: 2000, 2001, 2002, 2003 Zone identities - location areas mapping:
- Zone 1: 2000, 2001;
- Zone 5: 2002.

Example 1: Subscriber initiates location update to location area 1001 (in MSC1). Since the location area 1001 is part of allowed zones 1 and 2, location update is performed.

Example 2: Subscriber initiates a call in location area 1004 (in MSC1). Since the location area 1004 does not belong to any of the allowed zones for the subscriber (i.e., 1, 2 and 5), the call is rejected.

Example 3: Subscriber initiates a sending of a short message in location area 1000 (in MSC1). Since location area 1000 is within the allowed zone 1 for the subscriber, short message can be sent.

However, when a call has started in a location area where a subscriber is allowed to access service and a handover to a location area belonging to a zone where the subscriber is not allowed to access services is requested, the session will be allowed to continue, since it is not verified whether the subscriber is allowed to access services or not in the zone to which the subscriber is handed over. For example, in the above described example, if the subscriber initiates a call in the location area 1000 and then a handover to location area 1004 happens, the MSC1 does not verify if the location area 1004 belongs to an allowed zone or not and the call continues without rejection. Similarly, in case a handover happens to a location area under MSC2 in the above described example, MSC2 is not aware of the allowed zone identities, since only MSC1 where the location update happens is aware of the allowed zone identities.

Thus, after a successful handover, a subscriber can freely continue to access services in zones where the subscriber is not allowed to access services as defined by the operator, since it is not verified if the location area belongs to an allowed zone and further in case of inter-MSC handovers, the target MSC to which the handover happens is not even aware of the allowed zone identities. This means zone identities for a subscriber and zone configurations defined by the operator have no impact on subscribers' access to services while being mobile in handover scenarios. Thus network operator cannot restrict service access in case of sessions in which handovers happen.

Although the problems described above refer to network elements in circuit switched domain, similar problems exist in packet switched domain, wherein a serving GPRS support node (SGSN) provides similar functions as MSC in circuit switched domain.

Thus, there is a need for procedures by which zone information defined by a network operator can be used in handover scenarios in circuit switched and packet switched domains of mobile networks.

European patent application publication number EP 1,993,309 A1 relates to methods for mobility policy in a Worldwide Interoperability for Microwave Access-based communication system.

"Digital cellular telecommunications system (Phase 2+) Handover procedures (GSM 09.09 version 5.1.0)" comprises a description of the handover procedures to be used in GSM PLMNs.

### SUMMARY

The present invention is defined by the appended independent claims. Certain more specific aspects are defined by the dependent claims.

The embodiments and/or examples of the following description which are not covered by the appended claims are considered as not being part of the present invention.

In consideration of the above, it is an object of examples of the present invention to overcome one or more of the above drawbacks. In particular, the present invention provides methods, apparatuses, a system, and a related computer program product for service access restrictions during handover scenarios in communication networks.

Embodiments of the present invention may have one or more of following advantages:
- A network operator can have better control over availability of services in the network;
- A network operator can advantageously introduce restrictions in service availability for all subscribers of the network in a particular area either temporarily or permanently;
- A network operator can specifically introduce per subscriber based rules for regional roaming;
- The procedures described herein can advantageously be used in any handover scenario (intra-MSC, inter-MSC, inter-system etc).
- The procedures described herein can work in various types of network such as GSM, UMTS, Unlicensed mobile access (UMA) networks, Circuit-switched networks, packet switched networks etc.

### BRIEF DESCRIPTION OF THE DRAWINGS

Examples of the present invention are described herein below with reference to the accompanying drawings, in which:
Fig. 1 shows a network architecture, according to an example of the present invention, wherein intra-MSC handover may be performed;
Fig. 2 shows an intra-MSC handover procedure in a GSM network according to an example of the present invention;
Fig. 3 shows an intra-3G_MSC handover procedure in a UMTS network according to an example of the present invention;
Fig. 4 shows an inter-system (GSM-UMTS) intra-MSC handover procedure according to an example of the present invention;
Fig. 5 shows a network architecture, according to the present invention, wherein inter-MSC handover as well as inter-system handover may be performed;
Fig. 6 shows an inter-MSC handover procedure in a GSM network according to an example of the present invention;
Fig. 7 shows a network architecture, according to the present invention, wherein a subsequent inter-MSC handover may be performed;
Fig. 8 shows a successful subsequent inter-MSC handover procedure in a GSM network according to an example of the present invention;
Fig. 9 shows a failed subsequent inter-MSC handover procedure in a GSM network according to an example of the present invention; and
Fig. 10 shows apparatuses and systems according to an example of the present invention.

### DETAILED DESCRIPTION OF THE PRESENT INVENTION

Examples of the present invention are described herein below by way of example with reference to the accompanying drawings.

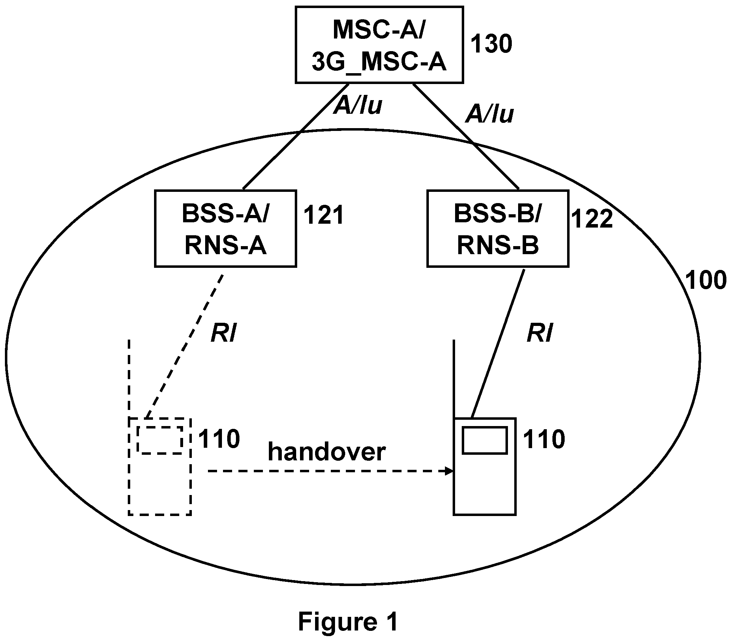

Figure 1 illustrates an intra-MSC handover from one base station system (BSS-A) or radio network system (RNS-A) to another base station system (BSS-B) or radio network system (RNS-B). Relevant interfaces between the network elements are also shown in figure 1. Within the access network 100, the mobile station (MS) or user equipment (UE) 110 can connect to the base station system (BSS) 121 or 122 in a GSM network or a radio network system (RNS) 121 or 122 in an UMTS network through a radio interface (*RI*)*.* The radio interface is defined as Um in GSM networks and Uu in UMTS networks. The BSSs 121 and 122 can connect to the same MSC (MSC-A) 130 in core network using the A-interface of the GSM standard. In case of UMTS networks, the RNSs 121 and 122 can connect to the 3G_MSC (3G_MSC-A) 130 using the Iu interface defined in 3gpp standards.

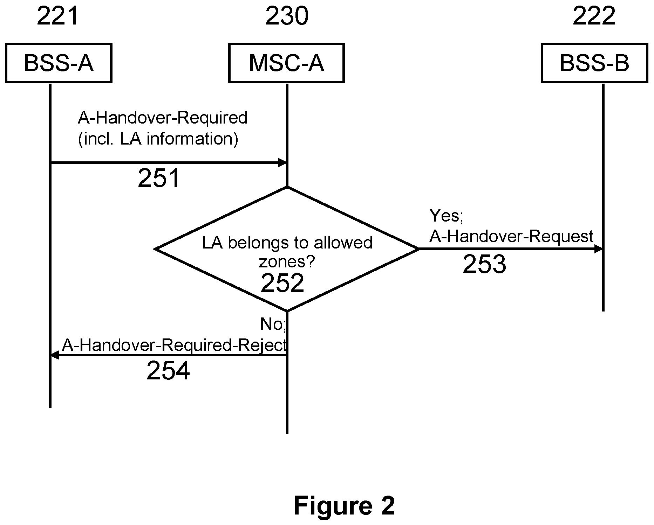

Figure 2 illustrates an exemplary intra-MSC handover procedure in a GSM network in accordance with the present invention. A mobile station or user equipment of a subscriber can measure and periodically report to a base station system the signal quality of the current and neighboring cells (not shown in the figure). If the BSS-A determines that, for instance, the signal quality is not good enough and a neighboring cell is offering a better signal quality, the BSS can send a handover requirement message 251, e.g., A-Handover-Required, to MSC-A over the A-interface. It may be noted that poor signal quality is only one exemplary reason for a handover requirement and there can be several other reasons for such a handover requirement, such as, for example, poor uplink/downlink quality or strength, traffic in a cell and need to reduce load in a serving cell. The handover required message 251 contains the location area (LA) of the handover destination. Upon receipt of the handover required message, the MSC-A can verify (252) if the LA belongs to a zone where the subscriber is allowed to access services. It may be noted that during a call set up, the MSC-A can receive at least one of a list of allowed zones and restricted zones, for example as zone identities, for the subscriber from the visiting location register (VLR), which could have originally received it from the home location register (HLR) at the time of location update. Also, a mapping of zone identities and location areas can be stored in the MSC-A. If the MSC-A determines that the LA belongs to a zone where the subscriber is allowed to access services, it can send an A-Handover-Request message 253 to the target base station system (BSS-B). If the MSC-A determines that the LA does not belong to an allowed zone for the subscriber, it can send an A-Handover-Required-Reject message 254 to the source base station system (BSS-A) .

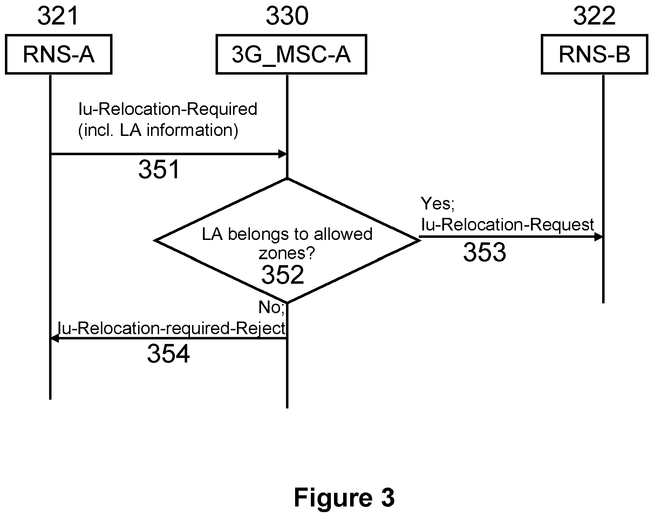

Figure 3 illustrates an intra-MSC handover procedure in case of 3G UMTS networks. The procedure is similar to the handover procedure described in connection with GSM networks. The key differences are the interfaces and the message content. For example, the Handover-required message 251 and Handover-requested message 253 over A-interface in GSM networks (in figure 2) are respectively substituted by Relocation-Required message 351 and Relocation-Request message 353 over lu interface.

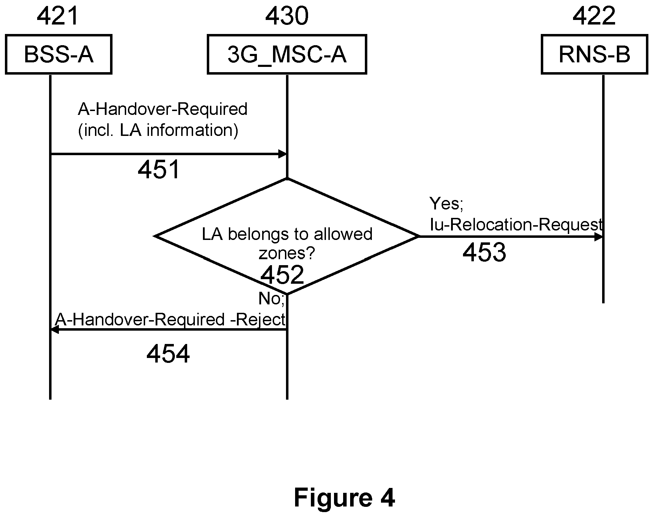

Figure 4 shows an inter-system intra-MSC handover procedure. In this case, a 3G_MSC 430 is assumed to support an A-interface with a BSS (BSS-A 421) . On receipt of a handover required message 451 that includes the location area information relating to RNS-B 422, the 3G_MSC-A 430 can verify (452) if the location area belongs to the allowed zones. It may be noted that during a call set up, the 3G_MSC-A 430 can receive at least one of a list of allowed zones and restricted zones, for example as zone identities, for the subscriber from the visiting location register (VLR), which could have originally received it from the home location register (HLR) at the time of location update. Also, a mapping of zone identities and location areas can be stored in the 3G_MSC-A. If the location area belongs to the allowed zones, the 3G_MSC-A 430 can send a Relocation Request over lu interface 453 to RNS-B 422. If the location area does not belong to the allowed zones, 3G_MSC-A 430 can send a Handover-Required-Reject message 454 to BSS-A 421.

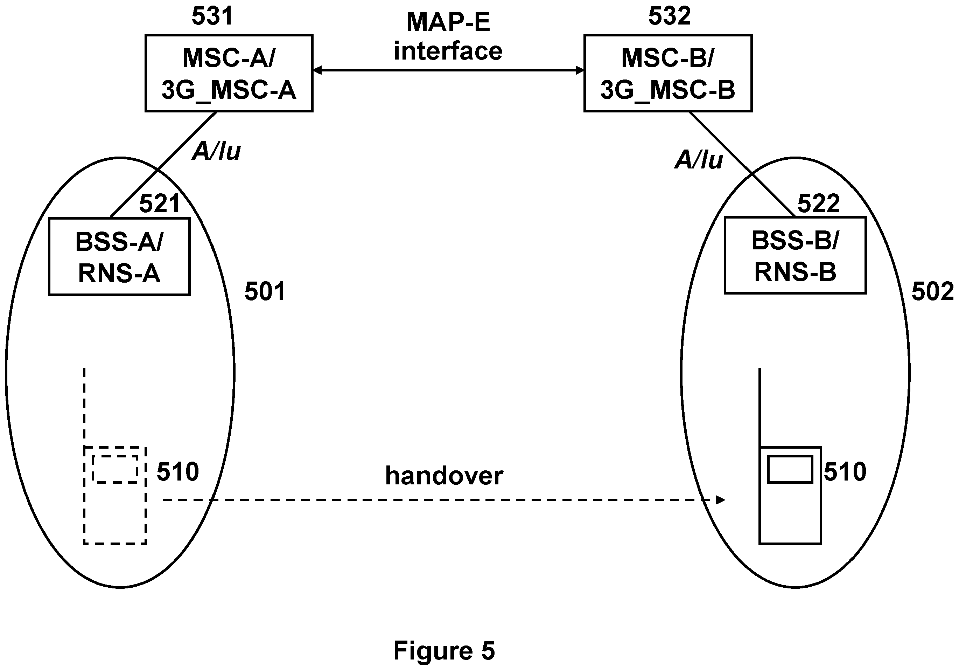

Figure 5 illustrates an inter-MSC handover from one mobile services switching centre (MSC-A 531) or 3G-mobile services switching centre (3G_MSC-A 531) to another mobile services switching centre (MSC-B 532) or 3G-mobile services switching centre (3G_MSC-B 532). Relevant interfaces between the network elements are also shown in figure 4. Within the
access area 501, the mobile station (MS) or user equipment (UE) 510 can connect to the base station system (BSS-A) 521 in a GSM network or a radio network system (RNS-A) 521 in an UMTS network through a radio interface (*RI*)*.* The radio interface is defined as Um in GSM networks and Uu in UMTS networks. Also shown in the figure is another access area 502 which can be the handover destination of the mobile station or user equipment 510. Within the access area 502, the mobile station (MS) or user equipment (UE) 510 can connect to the base station system (BSS-B) 522 in a GSM network or a radio network system (RNS-B) 522 in an UMTS network through a radio interface (*RI*)*.* As described earlier, the radio interface is defined as Um in GSM networks and Uu in UMTS networks. The BSS-A 521 can connect to the MSC-A 531 in core network using the A-interface of the GSM standard. In case of UMTS networks, the RNS-A 521 can connect to the 3G_MSC (3G_MSC-A) 531 using the Iu interface defined in 3gpp standards. Similarly, the BSS-B 522 can connect to the MSC-B 532 in core network using the A-interface of the GSM standard. In case of UMTS networks, the RNS-B 522 can connect to the 3G_MSC (3G_MSC-B) 532 using the Iu interface defined in 3gpp standards. It may be noted that MSC-A 531 or 3G_MSC-A 531 is referred to as the anchor MSC since it is in control of a call from initiation and MSC-B 532 or 3G_MSC-B 532 is referred to as the target MSC since it controls the network area of target of the handover. The mobile services switching centres, MSC-A 531 and MSC-B 532 can be connected through the MAP-E interface of GSM standards, the interface so referred to since the messages between the MSCs (531 and 532) are exchanged using MAP protocol.

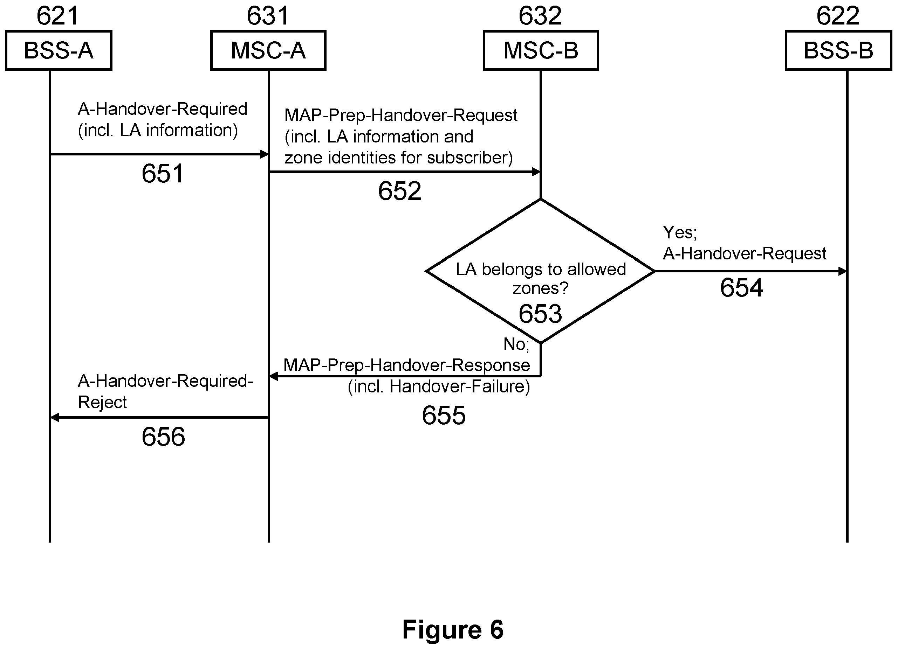

Figure 6 illustrates an exemplary inter-MSC handover procedure in a GSM network in accordance with the present invention. A mobile station or user equipment of a subscriber can measure and periodically report to a base station system the signal quality of the current and neighboring cells (not shown in the figure). If the BSS-A 621 determines that, for instance, the signal quality is not good enough and a neighboring cell is offering a better signal quality, the BSS-A 621 can send a handover requirement message 651, e.g., A-Handover-Required, to MSC-A 631 over the A-interface. It may be noted that poor signal quality is only one exemplary reason for a handover requirement and there can be several other reasons for such a handover requirement, such as, for example, poor uplink/downlink quality or strength, traffic in a cell and need to reduce load in a serving cell. The handover required message 651 can contain the location area (LA) of the handover destination. When the MSC-A 631 determines that the handover destination belongs to the network area covered by another MSC (MSC-B 632), MSC-A 631, the anchor MSC, can send a MAP-Prep-Handover-Request message 652 to MSC-B 632, referred to as the target MSC. The MAP-Prep-Handover-Request message 652 can include LA information of the handover destination received from BSS-A 621 and a list of zone identities for the subscriber. It may be noted that during a call set up, the MSC-A 631 can receive at least one of a list of allowed zones and restricted zones, for example as zone identities, for the subscriber from the visiting location register (VLR), which could have originally received it from the home location register (HLR) at the time of location update. Upon receipt of the Prep-Handover-Request message 652, the MSC-B 632 can verify (653) if the LA belongs to an allowed zone. This is possible since a mapping of zone identities and location areas within MSC-B can be stored in the MSC-B. If MSC-B 632 determines that the LA belongs to an allowed zone for the subscriber, it can send an A-Handover-Request message 654 to the target base station system (BSS-B 622). Further, MSC-B 632 can send an MAP-Prep-Handover-Response including Handover-Acknowledgement. message (not shown in figure) to MSC-A 631. If MSC-B 632 determines that the LA does not belong to an allowed zone for the subscriber, it can send an MAP-Prep-Handover-Response including Handover-Failure message 655 to MSC-A 631. Subsequently, MSC-A 631 can send an A-Handover-Required-Reject message 656 to BSS-A 621.

It may be noted that even though MSC-A/3G_MSC-A 531, 631 does not directly interface with BSS-B/RNS-B 522, 622 after an inter-MSC handover, MSC-A 531, 631, the anchor MSC, can still remain involved in the call control. For example, ciphering, assignment and charging can still be performed in MSC-A 531, 631 and the active call may be handed over back to MSC-A 531, 631.

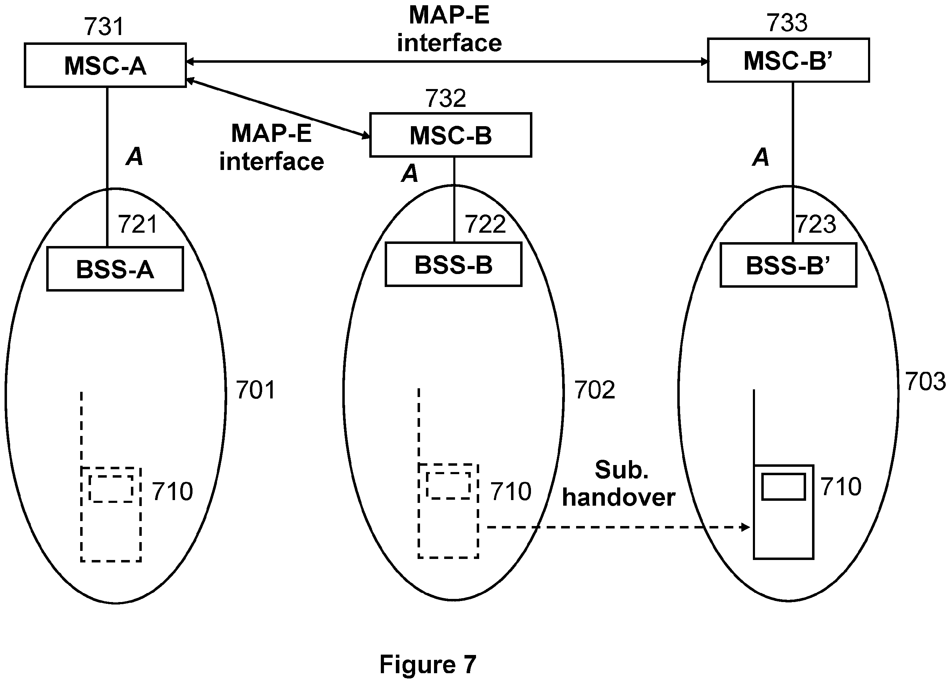

Figure 7 illustrates a subsequent inter-MSC handover in GSM networks. Relevant interfaces between the network elements are also shown in figure 7. Within the access area 701, the mobile station (MS) or user equipment (UE) 710 can connect to the base station system (BSS-A) 721 in a GSM network through the radio interface (*RI*)*.* The radio interface is defined as Um in GSM networks. Similarly, in the access areas 702 and 703, which are target of initial and subsequent handovers respectively, the mobile station or user equipment 710 can connect to the base station system BSS-B 722 and BSS-B' 723 respectively through the radio interface. The base stations systems BSS-A 721, BSS-B 722 and BSS-B' 723 can connect to the MSC-A 731, MSC-B 732 and MSC-B' 733 respectively in core network using the A-interface of the GSM standard. The mobile services switching centres, MSC-B 732 and MSC-B' 733 may connect to MSC-A 731 through a MAP E-interface of GSM standards, the interface so referred to since the messages between the MSCs can be exchanged using MAP protocol.

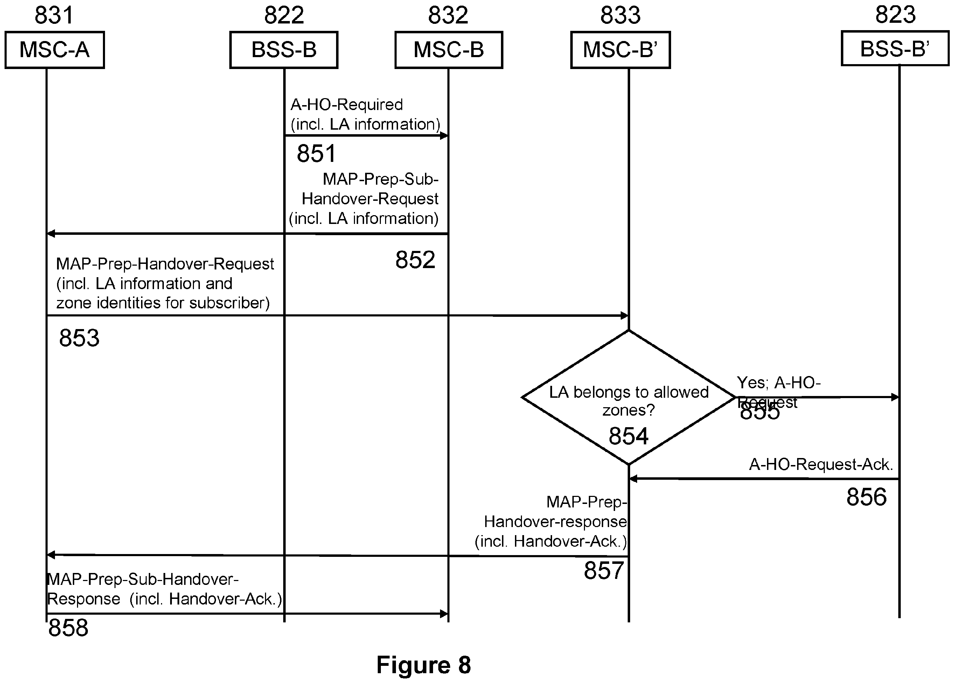

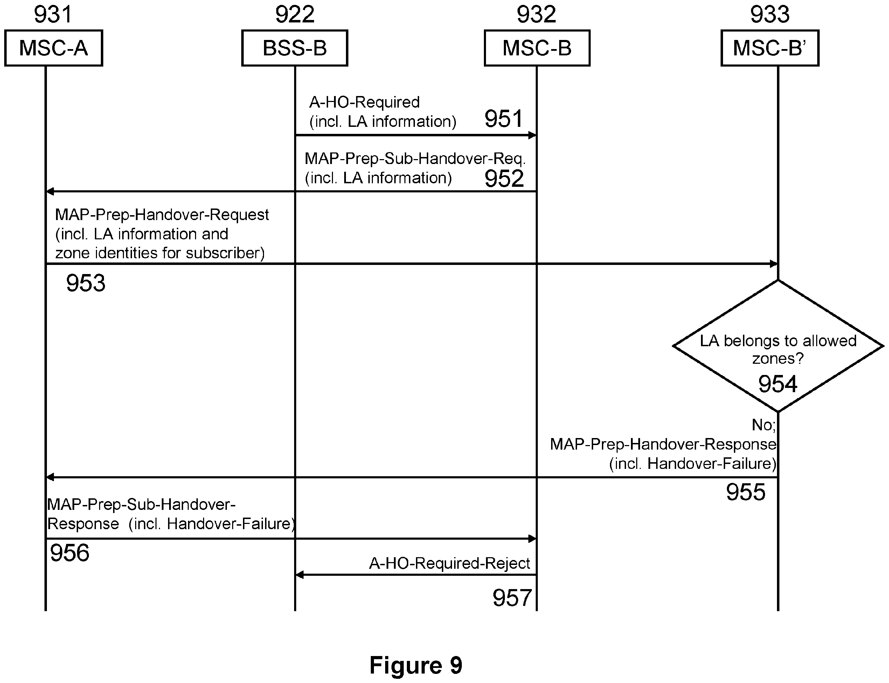

Figures 8 and 9 illustrate an exemplary subsequent inter-MSC handover procedure in a GSM network in accordance with the present invention. In this case, an initial handover may have been performed by MSC-A 831, 931 to MSC-B 832, 932. Subsequently, BSS-B 822, 922 can determine the necessity of a subsequent handover and can send a handover requirement message 851, 951, e.g., A-Handover-Required, to MSC-B 832, 932 over the A-interface. The handover required message 851, 951 contains the location area (LA) of the handover destination. Since the anchor MSC, MSC-A 831, 931 controls the call, MSC-B 832, 932 can send a prepare subsequent handover message 852, 952 that includes the LA information of handover destination to MSC-A 831, 931. When the MSC-A 831, 931 recognizes that the handover destination belongs to the network area covered by MSC-B' 833, 933, it can send a MAP-Prep-Handover-Request message 853, 953 to MSC-B' 833, 933. The MAP-Prep-Handover-Request message 853, 953 can include LA information of the handover destination and a list of zone identities for the subscriber. It may be noted that during a call set up, the MSC-A 831, 931 can receive at least one of a list of allowed zones and restricted zones, for example as zone identities, for the subscriber from the visiting location register (VLR), which could have originally received it from the home location register (HLR) at the time of location update. Upon receipt of the Prep-Handover-Request message 853, 953, the MSC-B' 833, 933 can verify (854,954) if the LA belongs to an allowed zone. This is possible since a mapping of zone identities and location areas within MSC-B' can be stored in the MSC-B'. Depending on the result of the verification, there are two possible situations as illustrated in figures 8 and 9 respectively.

If MSC-B' 833 determines that the LA belongs to an allowed zone for the subscriber, it can send a Handover-Request message 855 over A-interface to BSS-B' 823 as shown in figure 8. In response to the handover request message 855, BSS-B' can send a Handover-Request-Acknowledgement message 856 over A-interface to MSC-B'. Further, MSC-B' can send a MAP-Prepare-Handover-Response including Handover-Acknowledgement message 857 to MSC-A. Subsequently, MSC-A 831 can send a MAP-Prep-Sub-Handover-Response message including Handover-Acknowledgement 858 to MSC-B 832, which in turn can send a handover command message (A-HANDOVER-COMMAND) message over A-interface to BSS-B 822 (not shown in figure 8) .

If, on the other hand, MSC-B' 933 determines that the LA does not belong to an allowed zone for the subscriber, it can send an MAP-Prep-Handover-Response including Handover-Failure message 955 to MSC-A 931, as shown in figure 9. Subsequently, MSC-A 931 can send a MAP-Prep-Sub-Handover-Resp. including Handover-Failure message 956 to MSS-B 932, which in turn can send a handover required reject (A-Handover-Required-Reject) message 957 over the A-interface to BSS-B 922.

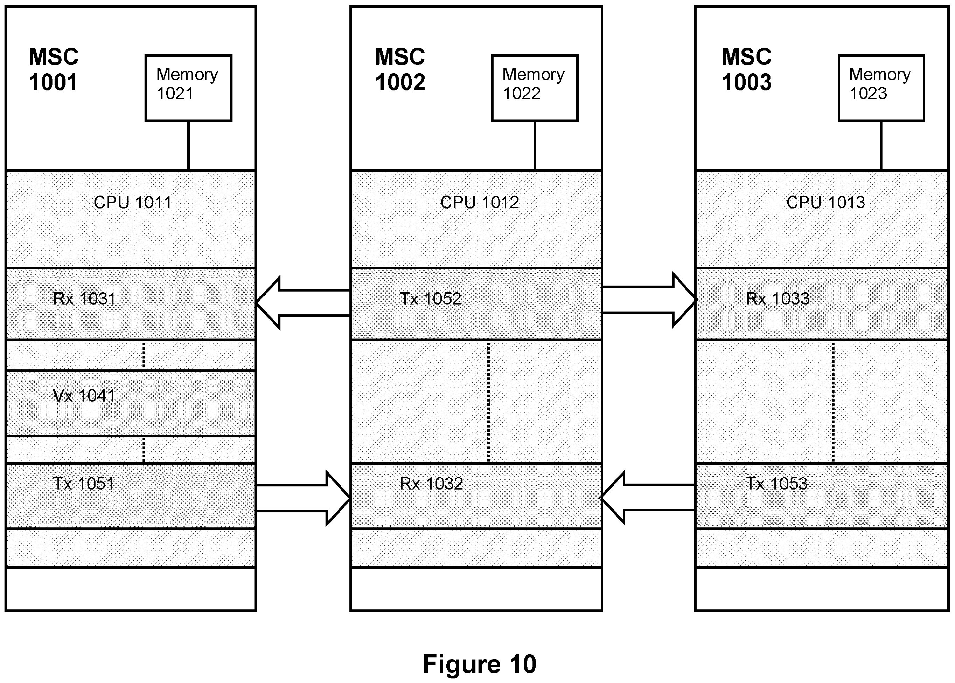

Figure 10 illustrates apparatuses (e.g., MSCs 1001 and 1002) for service access control according to the present invention. For sake of simplicity, only the main functions of the apparatuses are illustrated in the figure.

The first apparatus in accordance with the present invention (e.g., MSC 1001) may comprise a CPU (or a core functionality) 1011, a memory 1021, a receiver (or a means for receiving) Rx 1031, a verifier (or a means for verifying) Vx 1041, and a transmitter (or means for transmitting) Tx 1051.

It may be noted that the receiver 1031, the verifier 1041 and the transmitter 1051 of the MSC 1001 may be functionalities running on the CPU 1011 of the MSC, or may alternatively be separate functional entities or means. Furthermore, the verifier 1041 of the MSC 1001 may be, e.g., i) a functionality residing in the receiver 1031 of the MSC, (ii) a functionality residing partly in the receiver 1031 and partly in the transmitter 1051 of the MSC, or ii) may be a separate functionality of the MSC. In case of the verifier 1041 being part of the receiver, the verifier interfaces with the transmitter 1030 to transmit results of a verifying step performed by it. In case of verifier 1041 being a separate functionality of the MSC, it interfaces with the receiver 1031 and transmitter 1051 to receive messages for verification and transmit results of verification respectively.

The CPU 1011 may be configured to process various data inputs and to control the functions of the memory 1021, the receiver 1031, the verifier 1041, and transmitter 1051. In figure 10, the dotted lines show optional configurations while solid lines show the core configuration according to the present invention. The memory 1021 may serve e.g. for storing code means for carrying out e.g. the methods according to the examples of the present invention, when run e.g. on the CPU 1011. For example, the memory may store a mapping of location areas and zone identities. Additionally, the memory may also store policies or rules related to a communication system.

It is to be noted that the receiver 1031 and the transmitter 1051 may alternatively be provided as integral transceivers. It is further to be noted that the transmitters/receivers may be implemented i) as physical transmitters/receivers for transceiving e.g. via the air interface, ii) as routing entities e.g. for transmitting/receiving data packets e.g. in a PS (packet switched) network, or, iii) as any suitable combination of i) and ii).

The receiver 1031, for example, may perform receiving any of the handover or relocation related messages. Examples of such messages are:
- handover required message 251, 451 from a base station system 221, 421 (in GSM networks) over A-interface;
- relocation required message 351 from a radio network system 321 (in UMTS networks) over Iu-interface;
- Prep-Handover Request message 652, 853, 953 from an anchor MSC 631, 831, 931 over E-interface (MAP message).

The exemplary receiver 1031 of the present invention may perform receiving a MAP-Prep-Handover-Request message 652, 853, 953 over E-interface from an anchor MSC 631, 831, 931 (the MSC where a call was initiated), which message includes zone information for a subscriber. It may be noted that the receiver 1031 additionally performs receiving messages pertaining to call set up etc.

The transmitter 1051, for example, may perform transmitting any of the handover or relocation related messages. Examples of such messages are:
- handover request message 253, 654 to a base station system 222, 622 (in GSM networks) over A-interface;
- relocation request message 353, 453 to a radio network system 322, 422 (in UMTS networks) over Iu-interface;
- handover required reject message 254, 454 to a base station system 221, 421 (in GSM networks) over A-interface;
- relocation preparation failure message 354 to a radio network system 321 (in UMTS networks) over Iu-interface;
- Handover response message 855 to an anchor MSC 831 over E-interface (MAP message);
- Handover failure message 655, 955 to an anchor MSC 631, 931 over E-interface (MAP message).

It may be noted that the transmitter 1051 may additionally perform transmitting messages pertaining to call set up etc.

The verifier 1041, for example, in one embodiment as part of the receiver 1031, may perform upon receipt of a handover required message 251, 451, 351, 652, 853, 953 (e.g., A-Handover-Required, Iu-Relocation required, MAP-Prep-Handover-Request) verifying (252, 352, 452, 653, 854, 954) if the location area (LA) of the handover destination included in the message belongs to an allowed zone for the subscriber. The verifier further may interface with the transmitter 1051 to transmit the results of the verification.

In another embodiment, wherein the verifier 1041 may partly be a functionality within the receiver 1031 and partly be a functionality within the transmitter 1051, the functionality residing in the receiver may verify (252, 352, 452, 653, 854, 954) if the location area (LA) of the handover destination belongs to an allowed zone for the subscriber, and the functionality residing in the transmitter may transmit the result of the verification.

In yet another embodiment, the verifier 1041 may a separate functionality within the MSC. In this case, the verifier may interface with the receiver 1031 to verify (252, 352, 452, 653, 854, 954) if the location area (LA) of the handover destination belongs to an allowed zone for the subscriber, and further may interface with the transmitter 1051 to transmit the result of the verification.

In another aspect of the present invention, a second apparatus (e.g., MSC 1002) comprising a transmitter 1052 and receiver 1032 is disclosed, as illustrated in figure 10. The apparatus 1002 may have functions similar to apparatus 1001, with the exception of an absence of a verifier. The exemplary transmitter 1052 in apparatus 1002 may perform transmitting a Prep-Handover-Request message 652, 853, 953 that may include LA information and zone information for a subscriber.

The present invention also relates to a system which, in one embodiment, may comprise the above-described first apparatus (e.g., MSC 1001 in figure 10) and a plurality of base stations systems (e.g., 121, 122, 221, 222, 421 in figures 1-4) or radio network systems (321, 322, 422 in figures 3-4).

In another embodiment, the present invention relates to a system which may comprise the above-described first apparatus (e.g., MSC 1001 in figure 10) and the above-described second apparatus (e.g., MSC 1002 in figure 10).

In yet another embodiment of the present invention, a system is disclosed that comprises the above-described first apparatus (e.g., MSC 1001 in figure 10), the above-described second apparatus (e.g., MSC 1002 in figure 10) and a further apparatus (e.g., MSC 1003 in figure 10). The further MSC 1003 may comprise a transmitter that may perform transmitting a Prep-Sub-handover-request message that includes LA information over E-interface to the second apparatus (MSC 1002 in figure 10).

The present invention further relates to a computer program product. The computer program product may comprise code means for performing methods for handover procedures described herein, when run on a processing means or module.

Although the present invention has been described herein before with reference to particular embodiments thereof, the present invention is not limited thereto and various modifications can be made thereto. For example, the examples presented here relate to circuit switched domain. However, the procedures of the invention described herein can be extended to packet switched domain wherein a service GPRS support node (SGSN) performs the functions of MSC. Further the invention can be extended to any inter-system handover scenarios, as for example, in a handover from GSM or UMTS to unlicensed mobile access (UMA) network. Examples of such procedures have not presented for sake of brevity.

## Claims

1. A method performed by a second mobile services switching centre comprising:
storing a mapping of zone identities and location areas;
receiving, from a first mobile services switching centre, a handover requisition message (251, 351, 451, 652, 853, 953) for a subscriber, the message comprising information relating to a location area of a handover destination, the handover requisition message comprising information comprising at least one of a list of zone identities indicating zones wherein the subscriber is allowed to access services and a list of zone identities indicating zones wherein the subscriber is not allowed to access services;
verifying (252, 352, 452, 653, 854, 954) if the location area of the handover destination belongs to a zone wherein the subscriber is allowed to access services; and
sending a first resultant message (253, 353, 453, 654, 855) to a first network element (222, 322, 422, 622, 823) if the result of said verifying is positive; and
sending a second resultant message (254, 354, 454, 655, 955) to a second network element (221, 321, 421, 631, 931) if the result of said verifying is negative.

2. The method according to claim 1, wherein the handover requisition message comprises one of the following:
A-HANDOVER-REQUIRED message (251, 451);
Iu-RELOCATION-REQUIRED message (351); and
MAP-Prep-handover-request message (652, 853, 953).

3. The method according to any preceding claim, wherein the first resultant message comprises one of the following:
A-Handover-Request message (253, 654; 855); and
Iu-Relocation-Request message (353, 453).

4. The method according to any preceding claim, wherein the second resultant message comprises one of the following:
A-Handover-Required-Reject message (254, 454);
lu-Relocation-preparation-failure message (354); and
MAP-Prep-Handover-Response comprising Handover-Failure message (655, 955).

5. A second mobile services switching centre (1001) comprising:
a receiver (1031) configured to receive a handover requisition
message from a first mobile services switching centre, the handover requisition message comprising information relating a location area of handover destination for a subscriber (251, 351, 451, 652, 853, 953), and comprising information comprising at least one of a list of zone identities indicating zones wherein the subscriber is allowed to access services and a list of zone identities indicating zones wherein the subscriber is not allowed to access services;
a storage configured to store a mapping of zone identities and location areas;
a verifier (1041) configured to verify (252, 352, 452, 653, 854, 954) if
the subscriber is allowed access services in the location area of handover destination; and
a transmitter (1051) configured to send a resultant message (253, 254, 353, 354, 453, 454, 654, 655, 855, 955) based on the result of the verifying in said verifier,
wherein if the result of the verifying is positive, the transmitter is configured to send the first resultant message to a first network element (222, 322, 422, 622, 823); and
wherein if the result of the verifying is negative, the transmitter is configured to send the second resultant message to a second network element (221, 321, 421, 631, 931).

6. The apparatus according to claim 5, wherein the handover requisition message comprises one of the following:
A-HANDOVER-REQUIRED message (251, 451);
Iu-RELOCATION-REQUIRED message (351); and
MAP-Prep-handover-request message (652, 853, 953).

7. The apparatus according to any of claims 5 and 6, wherein the resultant message comprises one of the following:
A-Handover-Request message (253, 654);
Iu-Relocation-Request message (353, 453);
MAP-Handover-Response message (855);
A-Handover-Required-Reject message (254, 454);
Iu-Relocation-preparation-failure message (354); and
MAP-Prep-Handover-Response comprising Handover-Failure message (655, 955).

8. A system (1002) comprising:
a first mobile services switching center apparatus comprising a first transmitter configured to send a handover requisition message to a second
mobile services switching center, the handover requisition message comprising information relating a location area of a handover destination for a subscriber and at least one of a list of zone identities indicating zones
wherein the subscriber is allowed to access services and a list of zone identities indicating zones wherein the subscriber is not allowed to access services; and
a second mobile services switching center apparatus comprising:
a second receiver configured to receive the handover requisition message from the first mobile services switching center apparatus, a storage configured to store a mapping of zone identities and location areas; and
a verifier configured to verify if the subscriber is allowed access services in the location area of handover destination, and a first transmitter configured to send a first resultant message and a second resultant message based on a result of the verifying in the verifier,
wherein if the result of the verifying is positive, the transmitter is configured to send the first resultant message to a first network element (222, 322, 422, 622, 823) (221, 321, 421, 631, 931), and
wherein if the result of the verifying is negative, the transmitter is configured to send the second resultant message to a second network element.

9. A computer program product comprising code means for performing method steps according to any one of claims 1 to 4, when run on a processing means or module.

## Patentansprüche

1. Verfahren, das durch eine zweite Mobildienst-Vermittlungsstelle durchgeführt wird, umfassend:
Speichern einer Abbildung von Zonenidentitäten und Standortbereichen;
Empfangen, von einer ersten Mobildienst-Vermittlungsstelle, einer Handover-Requisitionsnachricht (251, 351, 451, 652, 853, 953) für einen Teilnehmer, wobei die Nachricht Informationen bezüglich eines Standortbereichs eines Handover-Ziels umfasst, die Handover-Requisitionsnachricht Informationen umfasst, die eine Liste von Zonenidentitäten, die Zonen angeben, in denen es dem Teilnehmer erlaubt ist, auf Dienste zuzugreifen, und/oder eine Liste von Zonenidentitäten, die Zonen angeben, in denen es dem Teilnehmer nicht erlaubt ist, auf Dienste zuzugreifen, umfassen;
Verifizieren (252, 352, 452, 653, 854, 954), ob der Standortbereich des Handover-Ziels zu einer Zone gehört, in der es dem Teilnehmer erlaubt ist, auf Dienste zuzugreifen; und
Senden einer ersten resultierenden Nachricht (253, 353, 453, 654, 855) zu einem ersten Netzelement (222, 322, 422, 622, 823), falls das Ergebnis des Verifizierens positiv ist; und
Senden einer zweiten resultierenden Nachricht (254, 354, 454, 655, 955) zu einem zweiten Netzelement (221, 321, 421, 631, 931), falls das Ergebnis des Verifizierens negativ ist.

2. Verfahren nach Anspruch 1, wobei die Handover-Requisitionsnachricht eine der Folgenden umfasst:
EIN-HANDOVER-ERFORDERLICH-Nachricht (251, 451);
Iu-VERLAGERUNG-ERFORDERLICH-Nachricht (351); und
MAP-Prep-Handover-Anforderung-Nachricht (652, 853, 953) .

3. Verfahren nach einem vorangegangenen Anspruch, wobei die erste resultierende Nachricht eine der Folgenden umfasst:
Eine-Handover-Anforderung-Nachricht (253, 654; 855); und
Iu-Verlagerungsanforderung-Nachricht (353, 453).

4. Verfahren nach einem vorangegangenen Anspruch, wobei die zweite resultierende Nachricht eine der Folgenden umfasst:
Ein-Handover-Erforderlich-Abweisen-Nachricht (254, 454);
Iu-Verlagerungsvorbereitungsfehler-Nachricht (354); und
MAP-Prep-Handover-Antwort umfassend eine Handover-Fehler-Nachricht (655, 955).

5. Zweite Mobildienst-Vermittlungsstelle (1001), umfassend:
einen Empfänger (1031), der dazu ausgelegt ist, eine Handover-Requisitionsnachricht von einer ersten Mobildienst-Vermittlungsstelle zu empfangen, wobei die Handover-Requisitionsnachricht Informationen bezüglich eines Standortbereichs eines Handover-Ziels für einen Teilnehmer (251, 351, 451, 642, 853, 953) umfasst und Informationen umfasst, die eine Liste von Zonenidentitäten, die Zonen angeben, in denen es dem Teilnehmer erlaubt ist, auf Dienste zuzugreifen, und/oder eine Liste von Zonenintensitäten, die Zonen angeben, in denen es dem Teilnehmer nicht erlaubt ist, auf Dienste zuzugreifen, umfassen;
eine Speicherung, die dazu ausgelegt ist, eine Abbildung von Zonenidentitäten und Standortbereichen zu speichern;
einen Verifizierer (1041), der dazu ausgelegt ist, zu verifizieren (252, 352, 452, 653, 854, 954), ob es dem Teilnehmer erlaubt ist, im Standortbereich des Handover-Ziels auf Dienste zuzugreifen; und
einen Sender (1051), der dazu ausgelegt ist, eine resultierende Nachricht (253, 254, 353, 354, 453, 454, 654, 655, 855, 955) basierend auf dem Ergebnis des Verifizierens im Verifizierer zu senden,
wobei, falls das Ergebnis des Verifizierens positiv ist, der Sender dazu ausgelegt ist, die erste resultierende Nachricht zu einem ersten Netzelement (222, 322, 422, 622, 823) zu senden; und
wobei, falls das Ergebnis des Verifizierens negativ ist, der Sender dazu ausgelegt ist, die zweite resultierende Nachricht zu einem zweiten Netzelement (221, 321, 421, 631, 931) zu senden.

6. Vorrichtung nach Anspruch 5, wobei die Handover-Requisitionsnachricht eine der Folgenden ist:
EIN-HANDOVER-ERFORDERLICH-Nachricht (251, 451);
Iu-VERLAGERUNG-ERFORDERLICH-Nachricht (351); und
MAP-Prep-Handover-Anforderung-Nachricht (652, 853, 953) .

7. Vorrichtung nach einem der Ansprüche 5 und 6, wobei die resultierende Nachricht eine der Folgenden umfasst:
Eine-Handover-Anforderung-Nachricht (253, 654);
Iu-Verlagerungsanforderung-Nachricht (353, 453);
MAP-Handover-Antwort-Nachricht (855);
Ein-Handover-Erforderlich-Abweisen-Nachricht (254, 454);
Iu-Verlagerungsvorbereitungsfehler-Nachricht (354); und
MAP-Prep-Handover-Antwort, umfassend eine Handover-Fehler-Nachricht (655, 955).

8. System (1002), umfassend:
eine erste Mobildienst-Vermittlungsstellenvorrichtung, die einen ersten Sender umfasst, der dazu ausgelegt ist, eine Handover-Requisitionsnachricht zu einer zweiten Mobildienst-Vermittlungsstelle zu senden, wobei die Handover-Requisitionsnachricht Informationen bezüglich eines Standortbereichs eines Handover-Ziels für einen Teilnehmer und eine Liste von Zonenidentitäten, die Zonen angeben, in denen es dem Teilnehmer erlaubt ist, auf Dienste zuzugreifen, und/oder eine Liste von Zonenidentitäten, die Zonen angeben, in denen es dem Teilnehmer nicht erlaubt ist, auf Dienste zuzugreifen, umfasst; und
eine zweite Mobildienst-Vermittlungsstellenvorrichtung, die Folgendes umfasst:
einen zweiten Empfänger, der dazu ausgelegt ist, die Handover-Requisitionsnachricht von der ersten Mobildienst-Vermittlungsstellenvorrichtung zu empfangen, eine Speicherung, die dazu ausgelegt ist, eine Abbildung von Zonenidentitäten und Standortbereichen zu speichern; und
einen Verifizierer, der dazu ausgelegt ist, zu verifizieren, ob es dem Teilnehmer erlaubt ist, im Standortbereich des Handover-Ziels auf Dienste zuzugreifen, und einen ersten Sender, der dazu ausgelegt ist, eine erste resultierende Nachricht und eine zweite resultierende Nachricht basierend auf einem Ergebnis des Verifizierens im Verifizierer zu senden,
wobei, falls das Ergebnis des Verifizierens positiv ist, der Sender dazu ausgelegt ist, die erste resultierende Nachricht zu einem ersten Netzelement (222, 322, 422, 622, 823) (221, 321, 421, 631, 931) zu senden, und
wobei, falls das Ergebnis des Verifizierens negativ ist, der Sender dazu ausgelegt ist, die zweite resultierende Nachricht zu einem zweiten Netzelement zu senden.

9. Computerprogrammprodukt, das Codemittel zum Durchführen von Verfahrensschritten nach einem der Ansprüche 1 bis 4 umfasst, wenn es auf einem Verarbeitungsmittel oder -modul ausgeführt wird.

## Revendications

1. Procédé réalisé par un second centre de commutation de services mobiles, comprenant :
le stockage d'une mise en correspondance d'identités de zone et d'aires de localisation ;
la réception, à partir d'un premier centre de commutation de services mobiles, d'un message de demande de transfert (251, 351, 451, 652, 853, 953) pour un abonné, le message comprenant des informations concernant une aire de localisation d'une destination de transfert, le message de demande de transfert comprenant des informations comprenant au moins une d'une liste d'identités de zone indiquant des zones dans lesquelles l'abonné est permis d'accéder à des services et une liste d'identités de zone indiquant des zones dans lequel l'abonné n'est pas permis d'accéder à des services ;
la vérification (252, 352, 452, 653, 854, 954) que l'aire de localisation de la destination de transfert appartient ou non à une zone dans laquelle l'abonné est permis d'accéder à des services ; et
l'envoi d'un premier message résultant (253, 353, 453, 654, 855) à un premier élément de réseau (222, 322, 422, 622, 823) si le résultat de ladite vérification est positif ; et
l'envoi d'un second message résultant (254, 354, 454, 655, 955) à un second élément de réseau (221, 321, 421, 631, 931) si le résultat de ladite vérification est négatif.

2. Procédé selon la revendication 1, dans lequel le message de demande de transfert comprend un des suivants :
message A-HANDOVER-REQUIRED (251, 451) ;
message Iu-RELOCATION-REQUIRED (351) ; et
message MAP-Prep-handover-request (652, 853, 953).

3. Procédé selon une quelconque revendication précédente, dans lequel le premier message résultant comprend un des suivants :
message A-Handover-Request (253, 654 ; 855) ; et
message Iu-Relocation-Request message (353, 453).

4. Procédé selon une quelconque revendication précédente, dans lequel le second message résultant comprend un des suivants :
message A-Handover-Required-Reject (254, 454) ;
message Iu-Relocation-preparation-failure (354) ; et
message MAP-Prep-Handover-Response comprenant Handover-Failure (655, 955).

5. Second centre de commutation de services mobiles (1001), comprenant :
un récepteur (1031) configuré pour recevoir un message de demande de transfert à partir d'un premier centre de commutation de services mobiles, le message de demande de transfert comprenant des informations concernant une aire de localisation de destination de transfert pour un abonné (251, 351, 451, 652, 853, 953), et comprenant des informations comprenant au moins une d'une liste d'identités de zone indiquant des zones dans lesquelles l'abonné est permis d'accéder à des services et une liste d'identités de zone indiquant des zones dans lesquelles l'abonné n'est pas permis d'accéder à des services ;
un stockage configuré pour stocker une mise en correspondance d'identités de zone et d'aires de localisation ;
un vérificateur (1041) configuré pour vérifier (252, 352, 452, 653, 854, 954) que l'abonné est ou non permis d'accéder à des services dans l'aire de localisation de destination de transfert ; et
un transmetteur (1051) configuré pour envoyer un message résultant (253, 254, 353, 354, 453, 454, 654, 655, 855, 955) sur la base du résultat de la vérification dans ledit vérificateur,
dans lequel, si le résultat de la vérification est positif, le transmetteur est configuré pour envoyer le premier message résultant à un premier élément de réseau (222, 322, 422, 622, 823) ; et
dans lequel, si le résultat de la vérification est négatif, le transmetteur est configuré pour envoyer le second message résultant à un second élément de réseau (221, 321, 421, 631, 931).

6. Appareil selon la revendication 5, dans lequel le message de demande de transfert comprend un des suivants :
message A-HANDOVER-REQUIRED (251, 451) ;
message Iu-RELOCATION-REQUIRED (351) ; et
message MAP-Prep-handover-request (652, 853, 953).

7. Appareil selon l'une quelconque des revendications 5 et 6, dans lequel le message résultant comprend un des suivants :
message A-Handover-Request (253, 654) ;
message Iu-Relocation-Request (353, 453) ;
message MAP-Handover-Response (855) ;
message A-Handover-Required-Reject (254, 454) ;
message Iu-Relocation-preparation-failure (354) ; et
message MAP-Prep-Handover-Response comprenant Handover-Failure (655, 955).

8. Système (1002), comprenant :
un premier appareil de centre de commutation de services mobiles comprenant un premier transmetteur configuré pour envoyer un message de demande de transfert à un second centre de commutation de services mobiles, le message de demande de transfert comprenant des informations concernant une aire de localisation d'une destination de transfert pour un abonné et au moins une d'une liste d'identités de zone indiquant des zones dans lesquelles l'abonné est permis d'accéder à des services et une liste d'identités de zone indiquant des zones dans lesquelles l'abonné n'est pas permis d'accéder à des services ; et
un second appareil de centre de commutation de services mobiles comprenant :
un second récepteur configuré pour recevoir le message de demande de transfert à partir du premier appareil de centre de commutation de services mobiles, un stockage configuré pour stocker une mise en correspondance d'identités de zone et d'aires de localisation ; et
un vérificateur configuré pour vérifier si l'abonné est permis d'accéder à des services dans l'aire de localisation de destination de transfert, et un premier transmetteur configuré pour envoyer un premier message résultant et un second message résultant sur la base d'un résultat de la vérification dans le vérificateur,
dans lequel si le résultat de la vérification est positif, le transmetteur est configuré pour envoyer le premier message résultant à un premier élément de réseau (222, 322, 422, 622, 823) (221, 321, 421, 631, 931), et
dans lequel si le résultat de la vérification est négatif, le transmetteur est configuré pour envoyer le second message résultant à un second élément de réseau.

9. Produit programme d'ordinateur, comprenant des moyens codes pour réaliser des étapes de procédé selon l'une quelconque des revendications 1 à 4, lorsqu'il est exécuté sur un moyen ou module de traitement.
